(19) **Europäisches Patentamt / European Patent Office / Office européen des brevets**

(11) **EP 4 418 784 A1**

(12) **EUROPEAN PATENT APPLICATION**
published in accordance with Art. 153(4) EPC

(43) Date of publication:
**21.08.2024 Bulletin 2024/34**

(21) Application number: **22881333.3**

(22) Date of filing: **12.10.2022**

(51) International Patent Classification (IPC):
*H04W 72/04* (2023.01)   *H04L 1/08* (2006.01)
*H04W 74/08* (2024.01)   *H04W 74/00* (2009.01)
*H04B 7/022* (2017.01)

(52) Cooperative Patent Classification (CPC):
**H04B 7/022; H04L 1/08; H04W 72/04;**
**H04W 74/00; H04W 74/08**

(86) International application number:
**PCT/KR2022/015365**

(87) International publication number:
**WO 2023/063706 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2021 KR 20210136238**

(71) Applicant: **LG Electronics Inc.**
**Yeongdeungpo-gu**
**Seoul 07336 (KR)**

(72) Inventors:
• **JEONG, Chanho**
  **Seoul 06772 (KR)**
• **KIM, Hyungtae**
  **Seoul 06772 (KR)**
• **KANG, Jiwon**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR PERFORMING RANDOM ACCESS PROCEDURE IN WIRELESS COMMUNICATION SYSTEM**

(57) A method and a device for performing a random access procedure in a wireless communication system are disclosed. A method for performing a random access procedure according to an embodiment of the present disclosure may comprise the steps of: receiving, from a base station, a first PDCCH including a PDCCH order for triggering a random access procedure, wherein the first PDCCH is transmitted on multiple SS sets, the multiple SS sets are associated with multiple CORESETs, respectively, and multiple different quasi co-location (QCL) RSs are configured in multiple TCI states for the multiple CORESETs; transmitting a PRACH for the random access procedure to the base station in response to the PDCCH order; and receiving, from the base station, a second PDCCH including DCI for scheduling a PDSCH carrying a random access response for the random access procedure in response to the PRACH.

FIG.15

Receive PDCCH order triggering a random access procedure — S1501

Transmit a first message for a random access procedure — S1502

Receive a second message for a random access procedure — S1503

**Description**

[Technical Field]

The present disclosure relates to a wireless communication system, and in more detail, relates to a method and an apparatus of transmitting and receiving channel state information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for performing a random access procedure triggered by a PDCCH order.

In addition, an additional technical object of the present disclosure is to provide a method and an apparatus for performing a random access procedure when a PDCCH order is repeatedly transmitted based on/using a plurality of QCL (quasi co-location) RS (reference signals).

The technical objects to be achieved by the present disclosure are not limited to the above-described technical objects, and other technical objects which are not described herein will be clearly understood by those skilled in the pertinent art from the following description.

[Technical Solution]

A method of performing a random access procedure in a wireless communication system according to an aspect of the present disclosure may include: receiving, from a base station, a first physical downlink control channel (PDCCH) including a PDCCH order for triggering a random access procedure, wherein the first PDCCH is transmitted in a plurality of search space (SS) sets, each of the plurality of SS sets are related to a plurality of control resource sets (CORESET), and a plurality of different quasi co-location (QCL) reference signals (RS) are configured in a plurality of transmission configuration indication (TCI) states for the plurality of CORESETs; transmitting, to the base station, physical random access channel (PRACH) for the random access procedure in response to the PDCCH order; and receiving, from the base station, a second PDCCH including downlink control information (DCI) for scheduling a physical downlink shared channel (PDSCH) carrying a random access response for the random access procedure, in response to the PRACH. Based on the PDCCH order including a plurality of synchronization signal block (SSB) indices, the PRACH may be transmitted on a plurality of PRACH occasions related to the plurality of SSB indexes, and the PRACH may be transmitted based on one or more QCL RSs among the plurality of QCL RSs in consideration of detection of the first PDCCH by the terminal.

A method of performing a random access procedure in a wireless communication system according to an additional aspect of the present disclosure may include: transmitting, to a terminal, a first physical downlink control channel (PDCCH) including a PDCCH order for triggering a random access procedure, wherein the first PDCCH is transmitted in a plurality of search space (SS) sets, each of the plurality of SS sets are related to a plurality of control resource sets (CORESET), and a plurality of different quasi co-location (QCL) reference signals (RS) are configured in a plurality of transmission configuration indication (TCI) states for the plurality of CORESETs; receiving, from the terminal, a physical random access channel (PRACH) for the random access procedure in response to the PDCCH order; and transmitting, to the terminal, a second PDCCH including downlink control information (DCI) for scheduling a physical downlink shared channel (PDSCH) carrying a random access response for the random access procedure, in response to the PRACH. Based on the PDCCH order including a plurality of synchronization signal block (SSB) indices, the PRACH may be transmitted on a plurality of PRACH occasions related to the plurality of SSB indexes, and the PRACH may be transmitted based on one or more QCL RSs among the plurality of QCL RSs in consideration of detection of the first PDCCH by the terminal.

[Technical Effects]

According to an embodiment of the present disclosure, the PDCCH order can operates normally even in a situation where the PDCCH order is blocked, and reliability of the random access procedure can be improved.

In addition, according to an embodiment of the present disclosure, ambiguity regarding the performance of a random access procedure as the PDCCH order is repeatedly transmitted based on different QCL RSs can be prevented.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a process of acquiring system information.

FIG. 8 represents a random access process in a wireless communication system to which the present disclosure may be applied.

FIG. 9 represents a 2-step random access process in a wireless communication system to which the present disclosure may be applied.

FIG. 10 illustrates a method of multiple TRPs transmission in a wireless communication system to which the present disclosure may be applied.

FIG. 11 illustrates a random access procedure according to a PDCCH order in a wireless communication system to which the present disclosure can be applied.

FIG. 12 illustrates blocking of the STRP RACH preamble in a wireless communication system to which the present disclosure can be applied.

FIG. 13 illustrates QCL assumptions in a random access procedure according to an embodiment of the present disclosure.

FIG. 14 a diagram illustrating a signaling procedure between a base station and a terminal for a method of performing a random access procedure according to an embodiment of the present disclosure.

FIG. 15 is a diagram illustrating the operation of a terminal for a method of performing a random access procedure according to an embodiment of the present disclosure.

FIG. 16 is a diagram illustrating the operation of a base station for a method of performing a random access procedure according to an embodiment of the present disclosure.

FIG. 17 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

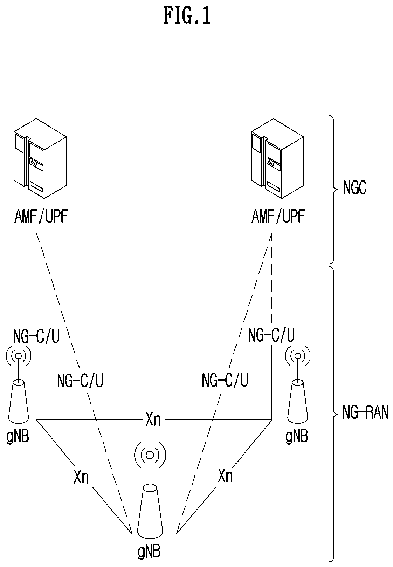

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

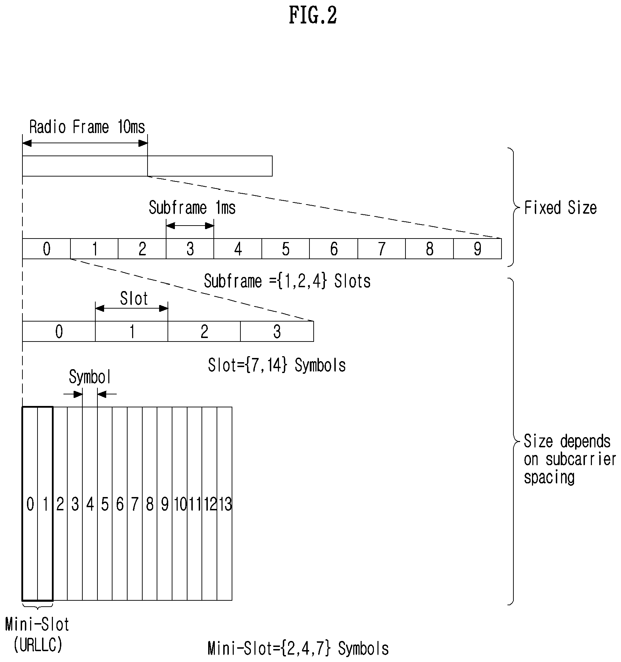

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz -52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is 480-103 Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s, f}^{\mu} \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame

$(N_{slot}^{frame,\mu})$ and the number of slots per subframe $(N_{slot}^{subframe,\mu})$ in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

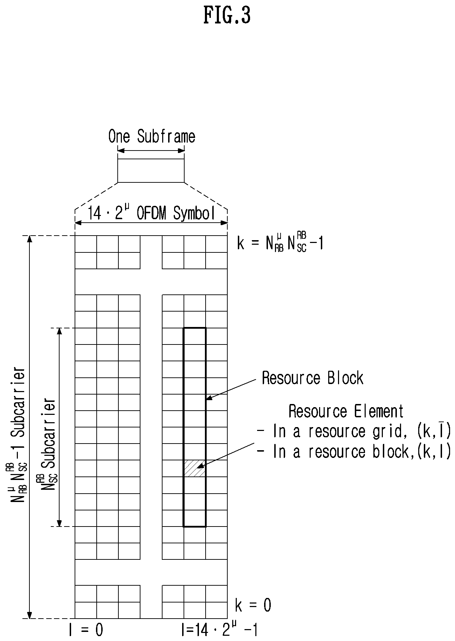

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{PB}^{\mu}N_{sc}^{PB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0, ..., $N_{RB}^{\mu}N_{sc}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k,l) is used. Here, l = 0, ..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

**[0044]** - offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

**[0045]** - absoluteFrequencyPointA represents a frequencyposition of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

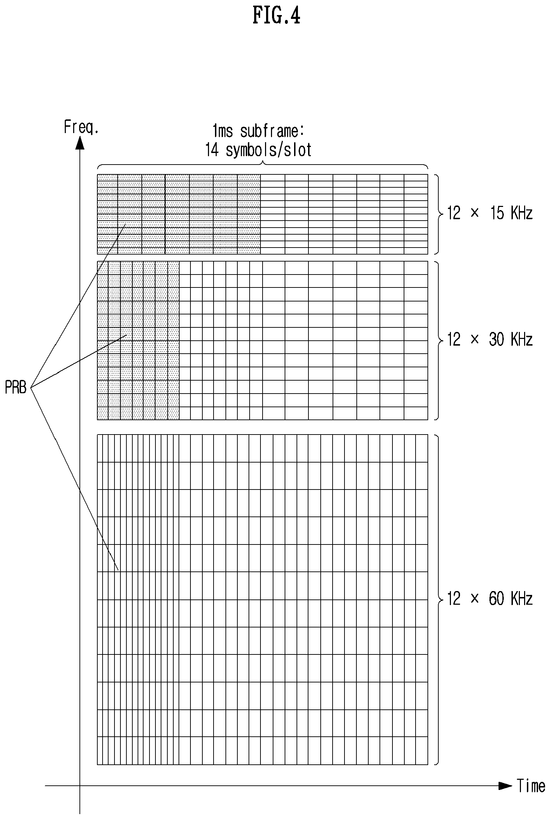

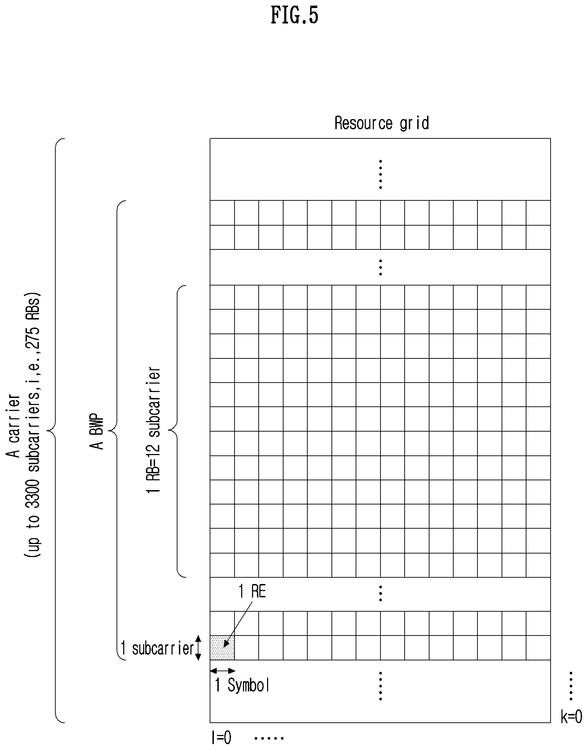

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

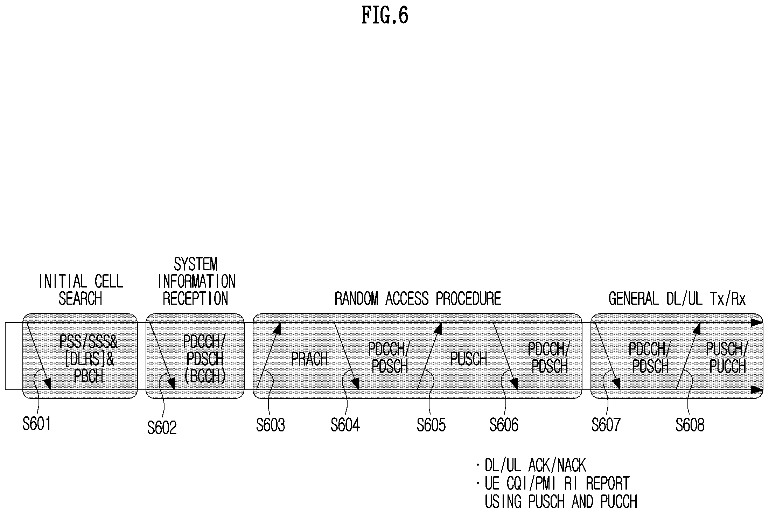

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601) . For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### System information acquisition

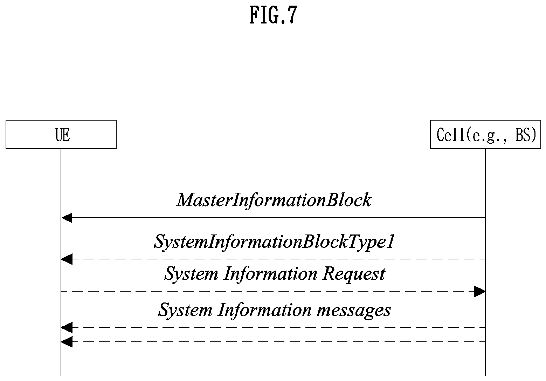

FIG. 7 illustrates a system information acquisition process.

A UE may obtain access stratum (AS)/non-access stratum (NAS) information through a system information (SI) acquisition process. A SI acquisition process may be applied to a UE in an RRC idle (RRC_IDLE) state, an RRC inactive (RRC_INACTIVE) state, and an RRC connected (RRC_CONNECTED) state.

SI is divided into a master information block (MIB) and a plurality of system information blocks (SIB). SI other than an MIB may be referred to as Remaining Minimum System Information (RMSI) and Other System Information (OSI) . RMSI corresponds to SIB1, and OSI refers to SIBs other than SIB2 and higher than SIB2. For details, the following may be referenced.

An MIB includes information/parameters related to SIB1 (SystemInformationBlockType1) reception and is transmitted through a PBCH of an SSB (SS/PBCH block). MIB information may include fields shown in Table 6.

Table 6 illustrates a portion of an MIB.

[Table 6]

| | |
|---|---|
| - subCarrierSpacingCommon | ENUMERATED {scs15or60, scs30or120}, |
| - ssb-SubcarrierOffset | INTEGER (0..15), |
| - pdcch-ConfigSIB1 | INTEGER (0..255), |

Table 7 illustrates a description of MIB fields illustrated in Table 6.

[Table 7]

| |
|---|
| pdcch-ConfigSIB1<br>The field pdcch-ConfigSIB1 determines a common ControlResourceSet (CORESET), a common search space and necessary PDCCH parameters.<br>If the field ssb-SubcarrierOffset indicates that SIB1 is absent, the field pdc ch-ConfigSIB1 indicates the frequency positions where the UE may find SS/PBCH block with SIB1 or the frequency range where th e network does not provide SS/PBCH block with SIB1<br>ssb-SubcarrierOffset.<br>The field ssb-SubcarrierOffset corresponds to k SSB, which is the frequency domain offset (number of subcarriers) between SSB and the overall resource block grid.<br>The value range of the field ssb-SubcarrierOffset may be extended by an additional most significant bit encoded within PBCH.<br>The field ssb-SubcarrierOffset may indicate that this cell does not provide SIB1 and that there is hence no CORESET#0 configured in MIB. In this case, the field pdcch-ConfigSIB1 may indicate the frequency positions where the UE may (not) find a SS/PBCH with a control resource set and search space for SIB1. |
| subCarrierSpacingCommon<br>The field subCarrierSpacingCommon indicates subcarrier spacing for SIB1, Msg.2/4 and MsgB for initial access, paging and broadcast SI-messages. If the UE acquires this MIB on an FR1 carrier frequency, the value scs15or60 corresponds to 15 kHz and the value scs30or120 corresponds to 30 kHz. If the UE acquires this MIB on an FR2 carrier frequency, the value scs15or60 corresponds to 60 kHz and the value scs30or120 corresponds to 120 kHz. |

Upon initial cell selection, a UE assumes that halfframes with an SSB are repeated in a period of 20 ms. A UE may check whether a Control Resource Set (CORESET) exists for the TypeO-PDCCH common search space based on an MIB. The TypeO-PDCCH common search space is a type of PDCCH search space and is used to transmit a PDCCH for scheduling an SI message. When the Type0-PDCCH common search space exists, a UE may determine (i) a plurality of contiguous RBs and one or more contiguous symbols constituting a CORESET and (ii) a PDCCH occasion (i.e., time domain location for PDCCH reception) based on information in an MIB (e.g., pdcch-ConfigSIB1). Specifically, pdcch-ConfigSIB1 is 8-bit information, (i) is determined based on 4 bits of MSB (Most Significant Bit) (refer to 3GPP TS 38.213 Table 13-1-13-10), and (ii) is determined based on 4 bits of LSB (Least Significant Bit) (refer to 3GPP TS 38.213 Table 13-11-13-15).

As an example, information indicated by MSB 4 bits of pdcch-ConfigSIB1 is exemplified as follows.

A configuration of a CORESET for the TypeO-PDCCH common search space is:

i) Define multiple tables according to subcarrier spacing and channel minimum bandwidth.
ii) Indicates a multiplexing pattern between an SS/PBCH block and a PDCCH/PDSCH.

- Pattern 1: All SCS combinations for FR1, all SCS combinations for FR2
- Pattern 2: Different SCS combinations for FR2 (except for the combination of 60 kHz for an initial DL BWP and 240 kHz SCS for a SS/PBCH block)
- Pattern 3: Same SCS combination for FR2 (for 120 kHz SCS)

iii) indicates the number of PRBs and OFDM symbols for a CORESET.

- $N_{RB}^{CORESET}$: number of RBs (i.e {24, 48, 96})
- $N_{Symb}^{CORESET}$: number of symbols (i.e. {1, 2, 3})

iv) Indicates an offset (the number of RBs) between the first RB of an SS/PBCH block and the first RB of an RMSI CORESET.

- A range of an offset (number of RBs) is determined by the number of PRBs and sync raster0.
- Design to align a center of an SS/PBCH block and a center of an RMSI CORESET as close as possible.

When the TypeO-PDCCH common search space does not exist, pdcch-ConfigSIB1 provides information on a frequency location where an SSB/SIB1 exists and a frequency range where an SSB/SIB1 does not exist.

In the case of initial cell selection, a UE may assume that a half frame with an SS/PBCH block occurs with a period of 2 frames. Upon detection of an SS/PBCH block, if $k_{SSB} \leq 23$ for FR1 (Sub-6 GHz; 450 to 6000 MHz) and $k_{SSB} \leq 11$ for FR2 (mm-Wave, 24250 to 52600 MHz), a UE determines that a control resource set for the TypeO-PDCCH common search space exists. If $k_{SSB} > 23$ for FR1 and $k_{SSB} > 11$ for FR2, a UE determines that a control resource set for the TypeO-PDCCH common search space does not exist. $k_{SSB}$ represents a frequency/subcarrier offset between subcarrier 0 of an SS/PBCH block and subcarrier 0 of a common resource block for an SSB. For FR2, only a maximum of 11 values can be applied. $k_{SSB}$ can be signaled through an MIB. An SIB1 includes information related to availability and scheduling (e.g., transmission period, SI-window size) of the remaining SIBs (hereinafter, SIBx, where x is an integer greater than or equal to 2). For example, an SIB1 may inform whether SIBx is periodically broadcast or provided at a request of a UE by an on-demand scheme. When SIBx is provided by an on-demand method, an SIB1 may include information necessary for a UE to perform an SI request. An SIB1 is transmitted through a PDSCH, a PDCCH scheduling the SIB1 is transmitted through the TypeO-PDCCH common search space, and the SIB1 is transmitted through a PDSCH indicated by a PDCCH.

SIBx is included in an SI message and transmitted through a PDSCH. Each SI message is transmitted within a periodically occurring time window (i.e., SI-window).

Random access operation and related operation

When there is no PUSCH transmission resource (i.e., uplink grant) allocated by a base station, a UE may perform a random access operation. Random access of the NR system may be initiated 1) when a UE requests or resumes an RRC connection, 2) when a UE performs handover to a neighboring cell or adds a secondary cell group (SCG) (i.e., SCG addition), 3) When a UE perform a scheduling request to a base station, 4) when a base station indicates to a UE random access with a PDCCH order, 5) when a beam failure or RRC connection failure is detected.

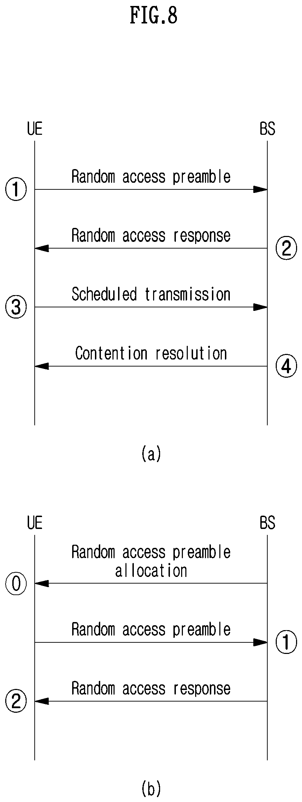

FIG. 8 illustrates a random access process in a wireless communication system to which the present disclosure may be applied. FIG. 8(a) exemplifies a contention-based random access process, and FIG. 8(b) exemplifies a dedicated random access process.

Referring to FIG. 8(a), a contention-based random access process includes the following 4 steps. Hereinafter, messages transmitted in steps 1 to 4 may be referred to as messages (Msg) 1 to 4, respectively.

- Step 1: A UE transmits a random access channel (RACH) preamble through a physical random access channel (PRACH).
- Step 2: A UE receives a random access response (RAR) from a base station through a downlink shared channel (DL-SCH).
- Step 3: A UE transmits a Layer 2/Layer 3 message to a base station through an uplink shared channel (UL-SCH).
- Step 4: A UE receives a contention resolution message from a base station through a DL-SCH.

A UE may receive information on random access from a base station through system information.

If random access is required, a UE transmits an RACH preamble to a base station as in step 1. A base station can distinguish each of random access preambles through a time/frequency resource through which an random access preamble is transmitted (i.e., RACH occasion (RO)) and a random access preamble index (PI).

When a base station receives a random access preamble from a terminal, the base station transmits a random access response (RAR) message to the terminal as in step 2. For reception of a random access response message, in a preconfigured time window (e.g., ra-ResponseWindow), a UE monitors a CRC-masked L1/L2 control channel (PDCCH) with an RA-RNTI (Random Access-RNTI), which includes scheduling information for a random access response message. A PDCCH masked with an RA-RNTI can be transmitted only through a common search space. When receiving a scheduling signal masked with an RA-RNTI, a UE may receive a random access response message from a PDSCH indicated by scheduling information. After that, a terminal checks whether there is random access response information indicated to it in a random access response message. Whether or not random access response information indicated to a UE exists can be confirmed by whether a random access preamble ID (RAPID) for a preamble transmitted by a terminal exists. An index of a preamble transmitted by a UE and a RAPID may be the same. Random access response information includes a corresponding random access preamble index, timing offset information for UL synchronization (e.g., timing advance command (TAC)), UL scheduling information for message 3 transmission (e.g., UL grant), and UE temporary identification information (e.g., TC-RNTI (Temporary-C-RNTI)).

A UE receiving random access response information transmits UL-SCH (Shared Channel) data (message 3) through a PUSCH according to UL scheduling information and a timing offset value, as in step 3. A time and frequency resource in which a PUSCH carrying message 3 is mapped/transmitted is defined as PO (PUSCH Occasion). Message 3 may include a UE's ID (or a UE's global ID). Alternatively, message 3 may include RRC connection request-related information (e.g., an RRCSetupRequest message) for initial access. Message 3 may also include a Buffer Status Report (BSR) on an amount of data available for transmission by a UE.

After receiving UL-SCH data, as in step 4, a base station transmits a contention resolution message (message 4) to a UE. When a UE receives a contention resolution message and contention is successfully resolved, a TC-RNTI is changed to a C-RNTI. Message 4 may include an ID of a UE and/or RRC connection related information (e.g., RRCSetup message). If information transmitted through message 3 and information received through message 4 do not match, or if message 4 is not received for a certain period of time, a UE may determine that contention resolution has failed and retransmit message 3.

Referring to FIG. 8(b), a dedicated random access process includes the following three steps. Hereinafter, messages transmitted in steps 0 to 2 may be referred to as messages (Msg) 0 to 2, respectively. A dedicated random access process may be triggered by using a PDCCH (hereinafter referred to as a PDCCH order) for instructing RACH preamble transmission by a base station.

- Step 0: A base station allocates a RACH preamble to a terminal through dedicated signaling.
- Step 1: A UE transmits a RACH preamble through a PRACH.
- Step 2: A UE receives a random access response (RAR) from a base station through a DL-SCH.

Operations of steps 1 to 2 of a dedicated random access process may be the same as steps 1 to 2 of a contention-based random access process.

In NR, DCI format 1_0 is used to initiate a non-contention based random access procedure with a PDCCH order. DCI format 1_0 is used to schedule a PDSCH in one DL cell. Meanwhile, when a Cyclic Redundancy Check (CRC) of DCI format 1_0 is scrambled with a C-RNTI and all bit values of a "Frequency domain resource assignment" field are 1, DCI format 1_0 is used as a PDCCH order indicating a random access process. In this case, fields of DCI format 1_0 are configured as follows.

- RA preamble index: 6 bits

- UL/SUL (Supplementary UL) indicator: 1 bit. When all bit values of a RA preamble index are not 0 and SUL is configured in a cell for a UE, a PRACH in a cell indicates a transmitted UL carrier. Otherwise, it is unused (reserved).
- SSB (Synchronization Signal/Physical Broadcast Channel) index: 6 bits. When all bit values of a RA preamble index are not 0, it indicates an SSB used to determine a RACH occasion for PRACH transmission. Otherwise, it is unused (reserved).
- PRACH mask index: 4 bits. When all bit values of a RA preamble index are not 0, a RACH occasion associated with an SSB indicated by an SSB index is indicated. Otherwise, it is unused (reserved).
- reserved: 10 bits

When DCI format 1_0 does not correspond to a PDCCH order, DCI format 1_0 is configured with fields used for scheduling a PDSCH (e.g., Time domain resource assignment (TDRA), Modulation and Coding Scheme (MCS), HARQ process number, PDSCH-to-HARQ_feedback timing indicator, etc.).

In NR systems, lower latency than existing systems may be required. In addition, if a random access process occurs in a U-band, a random access process is terminated and contention is resolved only when a UE and a base station sequentially succeed in LBT in all of a 4-step random access process. If LBT fails in any step of a 4-step random access process, resource efficiency is lowered and latency is increased. In particular, if LBT fails in a scheduling/transmission process associated with Message 2 or Message 3, resource efficiency reduction and latency increase may occur significantly. Even in an L-band random access process, a low-latency random access process may be required in various scenarios of the NR system. Therefore, a 2-step random access process can also be performed on an L-band.

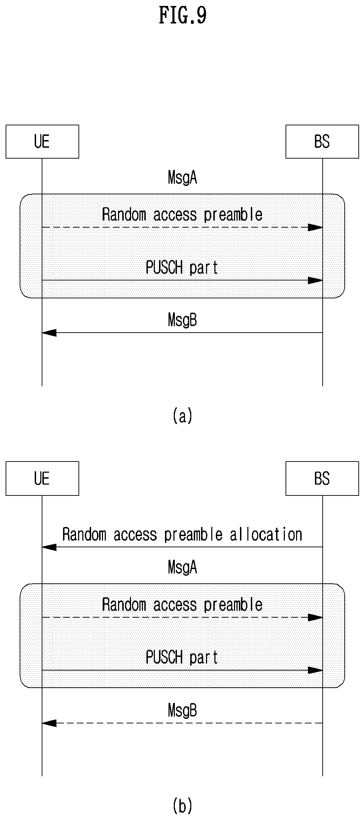

FIG. 9 illustrates a two-step random access process in a wireless communication system to which the present disclosure may be applied.

As shown in FIG. 9(a), a 2-step random access process may include two steps of transmitting an uplink signal (referred to as message A and corresponds to PRACH preamble + Msg3 PUSCH) from a UE to a base station and transmitting a downlink signal (referred to as message B and corresponding to RAR + Msg4 PDSCH) from a base station to a UE.

Also, in a non-contention random access process, as shown in FIG. 9(b), a random access preamble and a PUSCH part may be transmitted together.

Although not shown in FIG. 9, a PDCCH for scheduling message B may be transmitted from a base station to a UE, which may be referred to as Msg. B PDCCH.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs) (or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, an MTRP-URLLC may mean that the same TB (Transport Block) is transmitted using different layers/time/frequencies of M-TRPs. A UE configured with an MTRP-URLLC transmission method may be indicated with multiple TCI state(s) by DCI, and it may be assumed that data received using a QCL RS of each TCI state is the same TB. On the other hand, an MTRP-eMBB may mean that different TBs are transmitted using different layers/time/frequencies by M-TRPs. A UE configured with an MTRP-eMBB transmission method is indicated by several TCI state(s) by DCI, and it may be assumed that data received using a QCL RS of each TCI state are different TBs. In this regard, as a UE separates and uses an RNTI configured for an MTRP-URLLC purpose and an RNTI configured for an MTRP-eMBB purpose, it may be decided/determined whether corresponding M-TRP transmission is URLLC transmission or eMBB transmission. That is, when CRC masking of DCI received by a UE is performed using an RNTI configured for an MTRP-URLLC purpose, this may correspond to URLLC transmission, and CRC masking of DCI is performed using an RNTI configured for an MTRP-eMBB purpose, this may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter ControlResourceSet information element (IE) is used to configure a time/frequency control resource set (CORESET). For example, the control resource set (CORESET) may be related to detection and reception of downlink control information. The ControlResourceSet IE may include a CORESET-related ID (e.g., controlResourceSetID) / an index of a CORESET pool for a CORESET (e.g., CORESETPoolIndex) / a time/frequency resource configuration of a CORESET / TCI information related to a CORESET, etc. As an example, an index of a CORESET pool (e.g., CORESETPoolIndex) may be set to 0 or 1. In the above description, a CORESET group may correspond to a CORESET pool, and a CORESET group ID may correspond to a CORESET pool index (e.g., CORESETPoolIndex) .

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

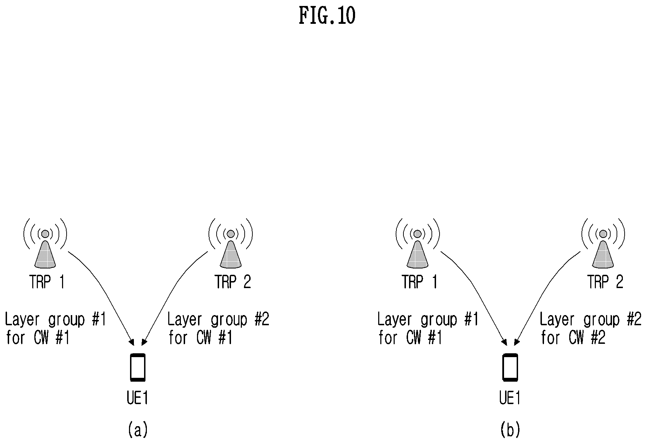

FIG. 10 illustrates a method of multiple TRPs transmission in a wireless communication system to which the present disclosure may be applied.

In reference to FIG. 10 (a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 10(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 10(b), it may have a disadvantage that a code rate corresponding to a TB is higher compared to FIG. 10(a). However, it has an advantage that it may adjust a code rate by indicating a different RV (redundancy version) value or may adjust a modulation order of each CW for encoded bits generated from the same TB according to a channel environment.

According to methods illustrated in FIG. 10(a) and FIG. 10(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Method for performing a random access procedure when repeatedly transmitting a PDCCH order of M-TRP

At the Rel-17 standardization meeting, for M-TRP PUCCH repeated transmission, the configuration method was enhanced so that two spatial relationship information can be configured in a UCCH resource. That is, power control (PC) parameters such as a pathloss reference signal (PLRS), alpha (variable used for open loop power control), open loop power control parameter P0, a closed loop power control index may be configured for each spatial relation info, and a spatial relation RS may be configured. Therefore, a UE may transmit the same uplink control information (e.g., CSI, HARQ-ACK information (i.e., ACK (acknowledgement), NACK (negative acknowledgment)), scheduling request (SR), etc.) on a PUCCH using first spatial relation info at transmission occasion (TO) 1 and on a PUCCH using second spatial relation info at TO 2.

Hereinafter, for convenience of explanation in this disclosure, a PUCCH resource for which two (or two or more) spatial relation info is configured is referred to as an MTRP PUCCH resource, and a PUCCH resource for which one spatial relation info is configured is referred to as a STRP PUCCH resource.

Hereinafter, control resource set (CORESET) and search space (SS) set configurations for repeated MTRP PDCCH transmission will be described.

For repeated MTRP PDCCH transmission, a plurality of CORESETs with different TCI states (i.e., different QCL RS) may be configured for a UE, and multiple SS sets linked/related to the corresponding CORESETs may be configured. A base station indicates/configures to a UE that a plurality of SS sets are linked/associated/paired for repeated transmission, therefore the UE can know that PDCCH candidates of the corresponding SS set are transmitted repeatedly. For example, two CORESETs, CORESET 0, 1, may be configured for a UE, CORESET 0, 1 may be linked/associated with SS sets 0, 1, respectively, and SS set 0, 1 can be linked/associative/paired. A UE can know that the same DCI is repeatedly transmitted in the PDCCH candidate(s) of SS set 0 and the PDCCH candidate (s) of SS set 1. Therefore, when receiving the PDCCH candidate(s) of SS set 0, a UE may use a QCL RS (i.e., DL beam) of a TCI state of COERSET 0 linked/associated with SS set 0, and when receiving the PDCCH candidate(s) of SS set 1, the UE may use a QCL RS (i.e., DL beam) of a TCI state of COERSET 1 linked/associated with SS set 1.

Hereinafter, CORESET and SS set configurations for single frequency network (SFN) transmission will be described.

As a special case of MTRP PDCCH repeated transmission, multiple TRPs may repeatedly transmit the same DCI through the same time/frequency/DMRS port, and this can be referred to as SFN PDCCH transmission. However, for SFN PDCCH transmission, a base station can configure multiple TCI states in one CORESET instead of configuring multiple CORESETs with different TCI states. In this case, a UE may attempt channel estimation and decoding using all of the plurality of TCI states when receiving PDCCH candidate(s) through an SS set linked/related to one CORESET.

A PDCCH order is a mechanism by which a base station forces a UE to start a PRACH. One of the most important purposes of a RACH (i.e. random access procedure) is to enable a UE to obtain synchronization with a network and establish an initial connection. In most cases, the decision to trigger PRACH transmission is made by a UE. However, when a base station forces a UE to initiate a RACH (i.e. random access procedure), the base station transmits a PDCCH order to the UE.

A RACH (i.e., random access procedure) between a UE and a base station is divided into two types.

First, in the general contention based method, a RRC connection is completed in higher layer (RAN2, for example, radio layers 2 and 3) through a four-step procedure as shown in FIG. 8 (a) .

Referring again to FIG. 8(a), step 1 corresponds to the step in which a UE transmits a random access request (MSG1) to a base station, the UE transmits a PRACH preamble (or RA (random access)-preamble) to the base station (while performing (or performing) this step, the UE performs initial beam acquisition, random selection of an RA-preamble identifier (ID), etc.).

- Step 2 corresponds to the step in which a UE receives a Random Access Response (RAR) (MSG2) from a base station, the UE obtains a response (e.g., timing alignment information, RA-preamble ID, initial UL grant, temporary C-RNTI, etc.) to random access from the base station through a PDSCH.
- Step 3 corresponds to the step in which a UE transmits a UL scheduled transmission (MSG3) to a base station, the UE transmits an RRC connection request, and UE identifier, etc. to the base station through a PUSCH.
- In step 4, a base station transmits contention resolution (MSG4) to a UE (temporary C-RNTI on PDCCH for initial access, C-RNTI on PDCCH for UE in RRC_CONNECTED state, etc.).

In a RACH (i.e., random access procedure) operation, a UE receives a type 1 PDCCH. Here, the MTRP PDCCH transmission method may be applied to some or all of a RACH operation. Specifically, a process by which a UE receives DCI in a RACH (i.e. random access procedure) operation is as follows.

When a UE receives MSG 2 (i.e., RAR), it receives DCI format 1-0 (i.e. RA RNTI is scrambled) using a RA-RNTI. (i.e., corresponds to step 2)

Afterwards, for retransmission of MSG 3, a UE receives DCI format 0-0 using a TC-RNTI. (i.e. corresponds to step 3)

Afterwards, when receiving MSG 4, a UE receives DCI format 1-0 using a TC-RNTI. (i.e. corresponds to step 4)

Second, the non-contention free method can prevent contention between multiple UEs by allowing a base station to designate and use a specific PRACH preamble for each UE, as shown in FIG. 8(b). A base station notifies a UE that a specific time and a resource can be used. This method is called Contention Free RACH (i.e. random access procedure). To use this method, a UE must be connected to a base station.

- In step 1, a base station allocates a RACH Preamble (i.e. PRACH) to a UE.
- In step 2 (MSG1), a UE transmits a RACH Preamble (RA-RNTI, indication for L2 (layer 2)/L3 (layer 3) message size, etc.) to a base station.
- In step 3 (MSG2), a UE receives a random access response (Timing Advance (TA), C-RNTI, UL grant for L2/L3 messages, etc.) from a base station.

After receiving a PDCCH order from a base station, a UE performs a contention free-based RACH (i.e., random access procedure) operation.

As the frequency increases, for example, in the case of FR2, the probability of occurrence of blockage (electromagnetic waves are blocked by various objects such as human body, building, brick, window, etc.) increases, and when blockage occurs, SINR (signal to interference noise ratio) degradation becomes more severe.

In order to solve the problem of signals being blocked due to such blockage, if a PDCCH is transmitted repeatedly once again with a different beam, the probability of blockage in two cells occurring simultaneously is low, and as a result, the probability of signal blocking may also be lowered.

Therefore, if repeated MTRP transmission is performed for a PDCCH order in a situation where blockage occurs, reliability can be improved due to macro diversity.

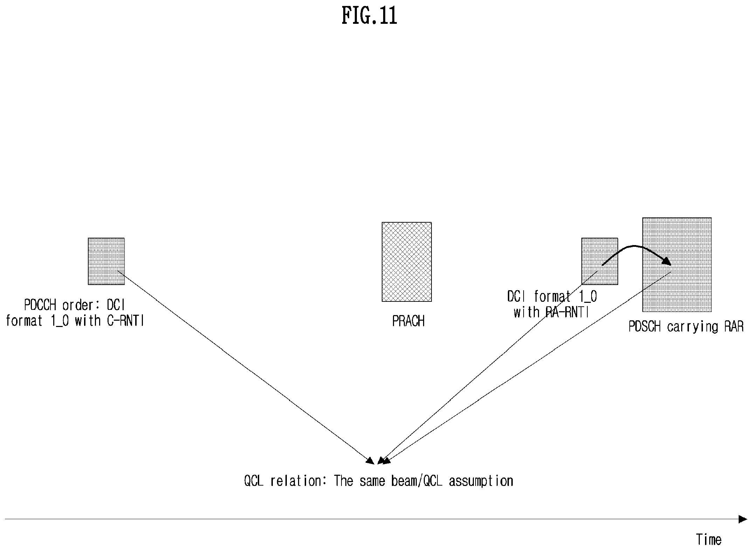

FIG. 11 illustrates a random access procedure according to a PDCCH order in a wireless communication system to which the present disclosure can be applied.

Referring to FIG. 11, since repetitive PDCCH transmission is not supported in the existing NR system, a PDCCH order is transmitted to a UE once. Here, if a UE fails to receive the corresponding a PDCCH (e.g., due to blocking, etc.), a base station may retransmit a PDCCH order after a certain period of time, however this operation is different from the PDCCH repetitive transmission method, which repeatedly transmits the same DCI from an initial transmission step.

According to current standards, a UE may assume that if a DM-RS port of a received PDCCH order and a DM-RS port of a corresponding PDSCH scheduled for which a RA-RNTI is used (i.e. PDCCH with cyclic redundancy check (CRC) scrambled with RA-RNTI) are QCLed (quasi co-located) with the same SS/PBCH block or CSI-RS with respect to spatial reception parameters, Doppler shift, Doppler spread, average delay, delay spread, they are the same beam. In other words, a DM-RS of a PDCCH order and a DM-RS of a PDSCH can be considered to be QCLed. The use of QCL in NR is extended to beam indication by adding a "spatial Rx parameter".

The current standard TS 38.321 defines it as shown in Table 8 below.

[Table 8]

| When receiving a PDSCH scheduled with RA-RNTI in response to a random access procedure triggered by a PDCCH order which triggers contention-free random access procedure for the SpCell [10, TS 38.321], the UE may assume that the DM-RS port of the received PDCCH order and the DM-RS ports of the corresponding PDSCH scheduled with RA-RNTI are quasi co-located with the same SS/PBCH block or CSI-RS with respect to Doppler shift, Doppler spread, average delay, delay spread, spatial RX parameters when applicable. |
| --- |

That is, when receiving a PDSCH scheduled with a RA-RNTI in response to a random access procedure triggered by a PDCCH order that triggers a contention-free random access procedure for a special cell (SpCell) (i.e. PCell and PSCell), a UE assumes that a DM-RS port of the received PDCCH order and a DM-RS port(s) of the corresponding PDSCH scheduled with the RA-RNTI are QCLed with the same SS/PBCH block or CSI-RS with respect to spatial RX parameters, Doppler shift, Doppler spread, average delay, delay spread.

In addition, the current standard TS 38.213 defines it as shown in Table 9 below.

[Table 9]

| If the UE attempts to detect the DCI format 1_0 with CRC scrambled by the corresponding RA-RNTI in response to a PRACH transmission initiated by a PDCCH order that triggers a contention-free random access procedure for the SpCell [11, TS 38.321], the UE may assume that the PDCCH that includes the DCI format 1_0 and the PDCCH order have same DM-RS antenna port quasi co-location properties. |
| --- |

That is, when a UE intends to detect DCI format 1_0 with a CRC scrambled by a corresponding RA-RNTI in response to a PRACH transmission initiated by a PDCCH order that triggers a contention-free random access procedure for SpCell, the UE may assume that a PDCCH including DCI format 1_0 and the PDCCH order have the same DM-RS antenna port QCL properties.

In summary, a UE may assume that a PDCCH order, a PDCCH containing a DCI format using a RA-RNTI received in response to PRACH transmission, and a PDSCH (i.e., PDSCH scheduled in DCI format using RA-RNTI) carrying an RAR (random access response) were all QCLed with the same SS/PBCH block or CSI-RS.

To increase reliability of a PDCCH order, the Rel-17 MTRP PDCCH repetitive transmission method may be applied.

As a PDCCH order is transmitted repeatedly through MTRP, the PDCCH order may be transmitted twice using two beams/QCL-RS. However, due to the same QCL conditions/assumptions described above, ambiguity may occur in beam determination of RAR DCI (DCI scheduling RAR PDSCH, i.e. DCI format with CRC scrambled with RA-RNTI) (or PDCCH with RAR DCI) and an RAR PDSCH (PDSCH carrying RAR). That is, either one of the two beams of a PDCCH order can be used, or the MTRP can be repeatedly transmitted by applying both beams to both RAR DCI (or PDCCH with RAR DCI) and RAR PDSCH (i.e. two beams in PDCCH order).

If RAR DCI (or PDCCH with RAR DCI) and a RAR PDSCH are repeatedly transmitted with MTRP by applying both beams (i.e. two beams in PDCCH order), a PDCCH order, DCI Format 1-0 using an RA-RNTI, and an RAR PDSCH are all transmitted repeatedly with different beams (i.e. QCL RS 1, 2). Therefore, a UE can receive a channel even in a situation where one of two beams is disconnected due to a blockage situation. Here, if only a PDCCH order is transmitted repeatedly with MTRP, RACH (i.e. random access procedure) still cannot obtain diversity gain in the blockage channel. Therefore, the improvement of transmitting only a PDCCH order through MTRP is meaningless. If MTRP transmission of a PDCCH order is for coverage enhancement (CE), it may be desirable to apply STRP repetition.

As described above, even if a PDCCH order, DCI Format 1-0 using an RA-RNTI, and an RAR PDSCH are all transmitted repeatedly (using two beams) through MTRP, if a RACH preamble (i.e. RACH MSG1) is transmitted toward STRP according to the existing method, the following problem occurs.

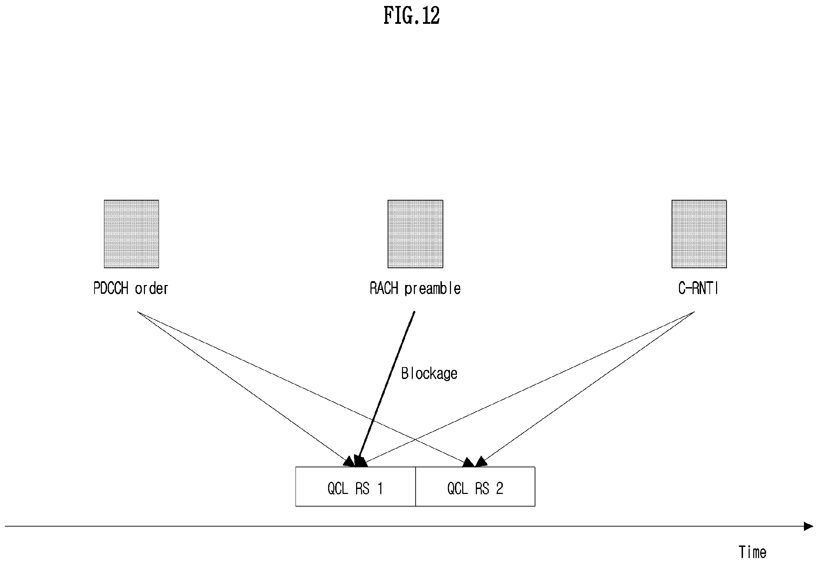

FIG. 12 illustrates blocking of the STRP RACH preamble in a wireless communication system to which the present disclosure can be applied.

In FIG. 12, both a PDCCH order and a PDCCH including a DCI format using a C-RNTI are transmitted with/based on two beams (i.e., QCL RS 1, QCL RS 2), this example illustrates that a RACH preamble is transmitted in/based on one beam (i.e., QCL RS 1).

Referring to FIG. 12, TRP 1 (i.e., QCL RS 1) cannot receive a RACH preamble due to blockage, so a RACH (i.e., random access procedure) cannot operate normally. That is, since MSG 1 was not received properly, a base station cannot also transmit MSG 2 to a UE. Therefore, even if a UE succeeds in receiving a PDCCH order, a RACH (i.e. random access procedure) does not operate normally.

Therefore, it is desirable that a RACH preamble is also repeatedly transmitted with two TRPs or transmitted selectively with a TRP in which blockage does not occur among the two TRPs (i.e., using a beam that does not cause blockage) using/based on two beams used for repeated PDCCH order transmission.

As described above, a PDCCH carrying/including a PDCCH order may be transmitted in multiple linked SS sets (i.e., repetitive transmission). Multiple SS sets may each be linked/associated with multiple CORESETs, and a TCI state may be configured for each of a plurality of CORESETs. TCI state can be configured with a QCL RS (e.g., SS/PBCH block, CSI-RS, etc.) and a QCL type (e.g., QCL-type A, QCL-type B, QCL-type C, QCL-type D, etc.).

Hereinafter, in the present disclosure, that a PDCCH is transmitted based on/using/through a QCL RS may mean that a QCL relationship is assumed between a QCL RS in a TCI state configured in a CORESET (i.e. associated with SS set) in which the PDCCH is monitored and a DM-RS of the PDCCH. In addition, that a PDCCH is transmitted based on/using/through a QCL RS may mean that a beam/space relationship applied to a QCL RS is also used/applied to the PDCCH transmission.

Additionally, in this disclosure, that the PDSCH is transmitted based on/using/through a QCL RS may mean that a QCL relationship is assumed between a QCL RS in a TCI state configured for a PDSCH and a DM-RS of a PDSCH. In addition, that a PDSCH is transmitted based on/using/through a QCL RS may mean that a beam/spatial relationship (spatial relationship RS) applied to the QCL RS is also used/applied to the PDSCH transmission.

In addition, in the present disclosure, that a PRACH is transmitted based on/using/through a QCL RS may mean that a beam/spatial relationship (spatial relationship RS) applied to the QCL RS is equally used/applied to the PRACH transmission. Additionally, if a TCI state (i.e., UL TCI state) is configured for the PRACH, in the present disclosure, that a PRACH is transmitted based on/using/through a QCL RS may mean that a beam/spatial relationship (spatial relationship RS) applied to a QCL RS in a TCI state configured for the PRACH is used/applied to the PRACH transmission.

In addition, in the present disclosure, a beam/spatial relationship (spatial relationship RS) can be substituted with a transmission spatial filter (TX spatial filter) and a spatial domain filter (spatial domain filter).

Additionally, in the present disclosure, paired/linked SS sets and/or CORESETs refer to SS sets and/or CORESETs used/configured for repeated transmission of DCI (i.e., PDCCH) .

In addition, in the following description of the present disclosure, for convenience of explanation, a random access procedure for two TRPs will be described as an example, however the present disclosure is not limited to this, and the methods of the present disclosure can be equivalently applied to random access procedures for TRPs exceeding 2.

Assume that a PDCCH order (i.e. PDCCH carrying PDCCH order) is repeatedly transmitted through TCI states 1 and 2 (it is may be equivalently substituted with "via QCL RS 1 (set by TCI state 1) and QCL RS 2 (set by TCI state 2)" or "via beam 1 (applied/used on QCL RS 1) and beam 2 (via/as applied to QCL RS 1)).

Embodiment 1: A UE may transmit a RACH preamble (i.e. PRACH transmission carrying/including preamble) using QCL RS 1 as a spatial relation RS (i.e. UL beam), and (at a later time, i.e. another RACH TO (i.e. PRACH occasion)) transmit the same RACH preamble (i.e. PRACH transmission carrying/including preamble) using QCL RS 2 as a spatial relation RS (i.e. UL beam).

For example, if a total of 4 PRACH occasions are configured, a UE may transmit a PRACH based on QCL RS 1 in PRACH occasions 1 and 3 and may transmit a PRACH based on QCL RS 2 in PRACH occasions 2 and 4 (i.e., QCL RS is used/applied alternately/sequentially for each PRACH occasion). Alternatively, a UE may transmit a PRACH based on QCL RS 1 in PRACH occasions 1 and 2, and may transmit a PRACH based on QCL RS 2 in PRACH occasions 3 and 4 (i.e., QCL RS is used/applied alternately/sequentially for each PRACH occasion group (including two or more PRACH occasions).

Here, a RACH transmission occasion (TO) (i.e., PRACH occasion) may be determined based on an SSB index indicated in a PDCCH order. As a RACH preamble (i.e. PRACH) is transmitted repeatedly, the corresponding RACH TO (i.e. PRACH occasion) should also increase to two. For this purpose, two SSB indexes can be indicated in a PDCCH order, and a UE can transmit a RACH preamble (i.e., PRACH) in the RACH TO (i.e., PRACH occasion) corresponding to each SSB index. For the above operation, a base station can configure a PRACH pair (or, RACH TO pair, PRACH occasion pair) consisting of a plurality of RACH TOs (i.e., PRACH occasions) to a UE.

When the MTRP PRACH repetitive transmission method is configured, it may be specified/configured to apply the same spatial relation RS (or uplink TCI) to a plurality of PRACH TOs (or PRACH pair) preconfigured by 'specific condition'. Here, 'specific condition' may be configured by a base station to a UE through higher layer signaling (e.g. RRC signaling, MAC control element (CE), etc.), or may be predefined in the standard.

For example, if a total of 4 PRACH occasions are configured as in the previous example, when 'specific condition' is satisfied, a UE can transmit a PRACH based on QCL RS 1 or QCL RS 2 on PRACH occasions 1, 2, 3, and 4.

Examples of the above 'specific condition' are as follows.

Example 1: When only one of the DCIs (i.e. PDCCH) in which a PDCCH order is repeatedly transmitted is normally detected

Example 2: When quality of a QCL (type-D) RS corresponding to each DCI (i.e., PDCCH) in which a PDCCH order is repeatedly transmitted is greater than a specific level.

In Example 1 above, this means that a base station repeatedly transmitted a PDCCH order based on two QCL RS (e.g., QCL type-D RS), however a UE detects (or completely receives) only a PDCCH order transmitted based on one of the QCL RSs.

In Example 2 above, this means that a base station repeatedly transmitted a PDCCH order based on two QCL RS (e.g., QCL type-D RS), and a UE also detected all PDCCH orders transmitted based on the two QCL RS, however the (received) quality (e.g. RSRP, RSRQ, etc.) of two QCL RSs differs by more than a certain predetermined (or configured by the base station) value.

Example 1 and Example 2 above may be applied individually, or both may be applied together.

If the 'specific condition' is not satisfied, a UE may perform repeated MTRP transmission when transmitting a PRACH. In other words, a different spatial relation (or uplink TCI) can be applied for each PRACH TO (i.e., PRACH occasion) or for each PRACH TO group. For example, if all DCIs (i.e., PDCCH) in which a PDCCH order is repeatedly transmitted are detected, or the quality of a QCL (type-D) RS corresponding to each DCI (i.e., PDCCH) is below a certain difference, a UE can repeatedly transmit a PRACH to MTRP with multiple spatial relations.

Embodiment 2: A UE may select one with good quality among QCL RS 1 and QCL RS 2 received for a PDCCH order, and may perform RACH preamble transmission using the selected QCL RS as a spatial relation RS.

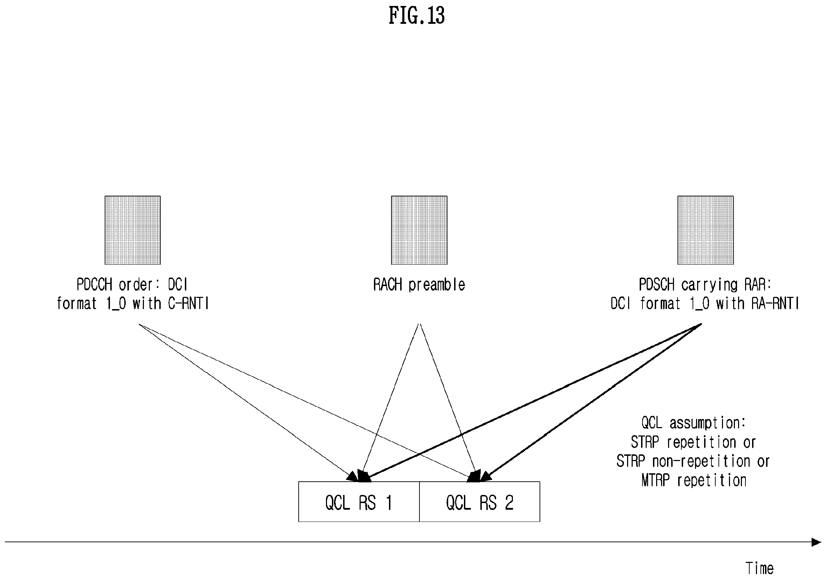

FIG. 13 illustrates QCL assumptions in a random access procedure according to an embodiment of the present disclosure.

Referring to FIG. 13, a UE may receive a PDCCH order based on QCL RS 1 from (via) TRP 1 and may receive a PDCCH order based on QCL RS 1 from (via) TRP 2. Here, it is assumed that QCL RS 1 corresponding to TRP 1 has poor channel quality due to blockage. In this case, a UE may select better quality (or better quality) QCL RS 2 and perform RACH preamble (i.e. PRACH) transmission through/based on/using QCL RS 2. In this case, since a base station cannot know which QCL RS a UE used to transmit a RACH, the base station can perform blind detection (BD) on a RACH preamble (i.e., PRACH) assuming that the corresponding RACH preamble (i.e., PRACH) can be received by both TRPs 1 and 2.

Based on the MTRP RACH preamble (i.e., PRACH) transmission operation as in the methods of Embodiments 1 and 2 described above, three operations are possible for a UE to receive an RAR (i.e., MSG2) from a base station: MTRP repetition, STRP repetition, and STRP non-repeated.

Here, a random access response (RAR) (i.e., MSG2) may include a PDCCH and a PDSCH for an RAR. That is, both a PDCCH including DCI with a CRC scrambled with an RA-RNTI and a PDSCH scheduled by the corresponding DCI (i.e., a PDSCH carrying an RAR message) can be transmitted and received with MTRP repetition, STRP repetition, and STRP non-repetition.

Hereinafter, for convenience of explanation, DCI (i.e., PDCCH including DCI) mainly using an RA-RNTI will be described, however the operations described below can be equally applied to a PDSCH reception scheduled by the DCI.

Here, depending on how a UE transmits a PRACH (i.e., whether a PRACH is transmitted based on/using/via multiple QCL RSs or based on/using/via a single QCL RS), among the three methods described above, an RAR transmission/reception method (i.e., PDCCH, PDSCH for RAR) can be determined.

If a UE repeatedly transmitted a PRACH on multiple PRACH occasions based on two QCL RS (i.e., MTRP repetition), a base station may repeatedly transmit a PDCCH and/or a PDSCH for an RAR based on the two QCL RS. For example, a base station may transmit a PDCCH for an RAR to a UE based on/using/through different QCL RSs in a plurality of SS sets.

On the other hand, when 'specific condition' is satisfied as in Embodiment 1 above, or when a UE repeats a PRACH with a specific TRP (corresponding to a high-quality QCL RS) or transmits with a TRP where blockage is avoided, only the corresponding TRP can repeatedly transmit a PDCCH and/or a PDSCH for an RAR using paired CORESET/SS (search space) (i.e., STRP repetition). Alternatively, only the TRP may transmit a PDCCH and/or a PDSCH for an RAR without repetition (STRP non-repetition) .

In the case of STRP repetition, the same QCL (type-D) RS can be applied to paired CORESET/SS. That is, when a base station transmits a PDCCH for an RAR to a UE in multiple SS sets, a PDCCH for an RAR may be transmitted to the UE based on/using/through an RS that is the same as or corresponds to a QCL RS (QCL type-D RS) applied/used by the UE for PRACH transmission. To support this transmission operation, a QCL (type-D) RS preset in paired CORSET/SS for corresponding DCI (i.e. PDCCH) can be ignored, a QCL assumption according to a QCL RS used/applied by a UE to PRACH transmission can be used/applied. To apply the above operation, a UE can expect to (repeatedly) receive a PDCCH and/or a PDSCH for an RAR with the same or corresponding downlink RS as a PRACH spatial relation RS (or UL TCI) selected and applied by a UE. For example, DCI (i.e., PDCCH) for an RAR can be (repeatedly) received with a corresponding QCL assumption used in PRACH transmission. Alternatively, a QCL RS related to (same or corresponding to) a QCL RS used for PRACH transmission may (repeatedly) receive DCI (i.e., PDCCH) for an RAR through a configured/designated CORESET/SS (pair).

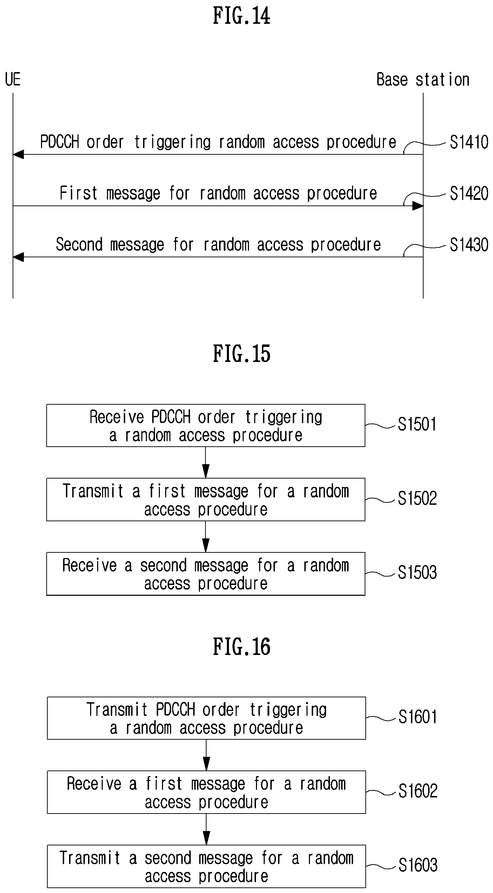

FIG. 14 a diagram illustrating a signaling procedure between a base station and a terminal for a method of performing a random access procedure according to an embodiment of the present disclosure.

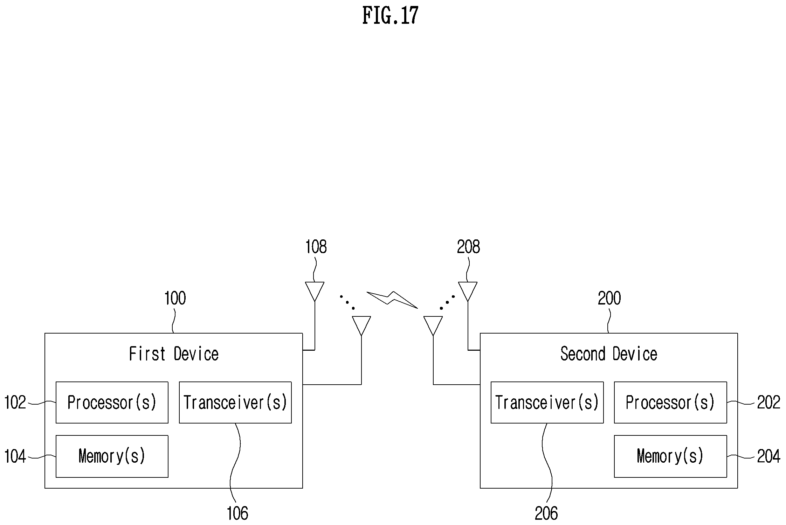

In FIG. 14, a signaling procedure between a terminal (UE: user equipment) and a base station (BS) based on the above-proposed methods is illustrated. An example of FIG. 14 is for convenience of a description, and it does not limit a scope of the present disclosure. Some step(s) illustrated in FIG. 14 may be omitted according to a situation and/or a configuration. In addition, in FIG. 14, a base station and a terminal are just one example, and may be implemented by a device illustrated in the following FIG. 17. For example, a processor 102/202 in FIG. 17 may be controlled to transmit and receive a channel/a signal/data/information, etc. by using a transceiver 106/206 and may be also controlled to store a channel/a signal/data/information, etc. which will be transmitted or received in a memory 104/204.

In addition, for an operation between a base station and a terminal in FIG. 14, the above-described contents may be referred to/used although not separately mentioned.

A base station may generally mean an object which performs transmission and reception of data with a terminal. For example, the base station may be a concept which includes at least one TP (Transmission Point), at least one TRP (Transmission and Reception Point), etc. In addition, a TP and/or a TRP may include a panel, a transmission and reception unit, etc. of a base station. In addition, a "TRP" may be applied by being substituted with an expression such as a panel, an antenna array, a cell (e.g., a macro cell/a small cell/a pico cell, etc.), a TP (transmission point), a base station (gNB, etc.), etc. As described above, a TRP may be classified according to information on a CORESET group (or a CORESET pool) (e.g., an index, an ID). In an example, when one terminal is configured to perform transmission and reception with multiple TRPs (or cells), it may mean that multiple CORESET groups (or CORESET pools) are configured for one terminal. Such a configuration for a CORESET group (or a CORESET pool) may be performed through higher layer signaling (e.g., RRC signaling, etc.).

In reference to FIG. 14, signaling between a base station and a terminal is considered for convenience of a description, but it goes without saying that a corresponding signaling method may be extended and applied to signaling between multiple TRPs and multiple UE. In the following description, a base station may be interpreted as one TRP. Alternatively, a base station may include a plurality of TRPs or may be one cell which includes a plurality of TRPs.

In addition, although not illustrated in FIG. 14, a base station may transmit configuration information (e.g., through system information) for performing a random access procedure to a terminal before the procedure of FIG. 14.

Referring to FIG. 14, a base station transmits a PDCCH order for triggering a random access procedure to a terminal (S1401).

Here, a PDCCH order may be transmitted through a PDCCH (hereinafter, a first PDCCH). Additionally, as described above, a PDCCH including a PDCCH order may be transmitted in multiple SS sets. Here, a plurality of SS sets may each be associated with a plurality of CORESETs, and a TCI state may be configured for each CORESET. TCI state can configure a QCL RS and a QCL type as described above. That is, a plurality of different QCL RSs may be configured in a plurality of TCI states for the plurality of CORESETs. In other words, the PDCCH order may be repeatedly transmitted to a terminal on a plurality of SS sets based on a plurality of different QCL RSs.

Additionally, the PDCCH order may include a plurality of SSB indices.

A terminal transmits a first message for a random access procedure to a base station in response to a PDCCH order (S1402).

Here, a first message for a random access procedure may correspond to MSG1 (i.e. PRACH or random access preamble transmitted on PRACH) and/or MSG3 (i.e. PDSCH scheduled by random access response UL grant) for the 4-step random access procedure (see FIG. 8), and may correspond to MSGA (i.e., PRACH and PUSCH carrying a random access preamble) (see FIG. 9) for the 2-step random access procedure.

Hereinafter, a PRACH will be mainly described for convenience of explanation, but the present disclosure is not limited thereto.

As in Embodiment 1, as a plurality of SSB indexes are included in a PDCCH order, the PRACH may be repeatedly transmitted on a plurality of PRACH occasions related to the plurality of SSB indexes.

Additionally, considering/based on detection of a PDCCH order (i.e., a first PDCCH) by a terminal, a PRACH may be transmitted to a base station based on/using/through one or more QCL RSs among the plurality of QCL RSs (i.e., used/applied for PDCCH order transmission).

For example, when the first PDCCH is detected by a UE in all of the plurality of SS sets, the PRACH may be transmitted based on/using/via the plurality of QCL RSs.

Alternatively, when the first PDCCH is detected by a terminal in only one SS set among the plurality of SS sets, the PRACH may be transmitted based on/using/through only a QCL RS associated with the one SS set among the plurality of QCL RSs.

Alternatively, even if the first PDCCH is all detected in the plurality of SS sets by a terminal, if reception quality of the plurality of QCL RSs differs by more than a specific value, the PRACH may be transmitted based on/using/through only a QCL RS with high reception quality among the plurality of QCL RSs.

In response to a first message, a base station transmits a second message for a random access procedure to a terminal (S1403).

Here, a second message for a random access procedure may correspond to MSG2 (i.e. PDCCH, PDSCH for random access response) and/or MSG4 (i.e. PDSCH for contention resolution) for the 4-step random access procedure (see FIG. 8), and may correspond to MSGB (i.e., PUSCH scheduled by the random access response UL grant and PDSCH for contention resolution) for the 2-step random access procedure (see FIG. 9).

For convenience of explanation, a PDCCH (hereinafter, a second PDCCH) for a random access response will be mainly described below, but the present disclosure is not limited thereto. Here, a second PDCCH refers to a PDCCH including a DCI (i.e. with CRC scrambled with RA-RNTI) that schedules a PDSCH carrying a random access response for the random access procedure in response to the PRACH.

As in Embodiment 2, the transmission operation of the second PDCCH may be determined depending on whether the PRACH is transmitted based on/using/through all of the plurality of QCL RSs or is transmitted based on/using/through only one of the plurality of QCL RSs.

For example, if the PRACH is transmitted based on/using/via all of the plurality of QCL RSs, the second PDCCH may be transmitted within a plurality of SS sets (here, the plurality of SS sets may be different from the plurality of SS sets through which the PDCCH order is transmitted) based on/using/through all of the plurality of QCL RSs (i.e., MTRP repetition).

Alternatively, if the PRACH is transmitted based on/using/via one QCL RS among the plurality of QCL RSs, the second PDCCH may be transmitted within a plurality of SS sets (here, the plurality of SS sets may be different from the plurality of SS sets through which the PDCCH order is transmitted) based on/using/through only the one QCL RS (i.e., STRP repetition). Here, regardless of whether a plurality of QCL RSs in a plurality of TCI states (i.e., TCI states configured in a plurality of CORESETs used for second PDCCH monitoring) related to the second PDCCH are configured, the second PDCCH may be transmitted based on/using/through only the one QCL RS.

Alternatively, if the PRACH is transmitted based on/using/via one QCL RS among the plurality of QCL RSs, the second PDCCH may be transmitted within a single SS set based on/using/through only the one QCL RS (i.e., STRP non-repetition).

Afterwards, in the case of a 4-step random access procedure, transmission and reception operations of MSG3 and MSG4 can be performed as illustrated in FIG. 8.

FIG. 15 is a diagram illustrating the operation of a terminal for a method of performing a random access procedure according to an embodiment of the present disclosure.

In FIG. 15, an operation of a terminal based on the above-proposed methods is illustrated. An example of FIG. 15 is for convenience of a description, and it does not limit a scope of the present disclosure. Some step(s) illustrated in FIG. 15 may be omitted according to a situation and/or a configuration. In addition, in FIG. 15, a terminal is just one example, and may be implemented by a device illustrated in the following FIG. 17. For example, a processor 102/202 in FIG. 17 may be controlled to transmit and receive a channel/a signal/data/information, etc. by using a transceiver 106/206 and may be controlled to store a channel/a signal/data/information, etc. which will be transmitted or received in a memory 104/204.

Referring to FIG. 15, a terminal receives a PDCCH order for triggering a random access procedure from a base station (S1501).

Here, a PDCCH order may be transmitted through a PDCCH (hereinafter, a first PDCCH). Additionally, as described above, a PDCCH including a PDCCH order may be transmitted in multiple SS sets. Here, a plurality of SS sets may each be associated with a plurality of CORESETs, and a TCI state may be configured for each CORESET. TCI state can configure a QCL RS and a QCL type as described above. That is, a plurality of different QCL RSs may be configured in a plurality of TCI states for the plurality of CORESETs. In other words, the PDCCH order may be repeatedly transmitted to a terminal on a plurality of SS sets based on a plurality of different QCL RSs.

Additionally, the PDCCH order may include a plurality of SSB indices.

A terminal transmits a first message for a random access procedure to a base station in response to a PDCCH order (S1502).

Here, a first message for a random access procedure may correspond to MSG1 (i.e. PRACH or random access preamble transmitted on PRACH) and/or MSG3 (i.e. PDSCH scheduled by random access response UL grant) for the 4-step random access procedure (see FIG. 8), and may correspond to MSGA (i.e., PRACH and PUSCH carrying a random access preamble) (see FIG. 9) for the 2-step random access procedure.

Hereinafter, a PRACH will be mainly described for convenience of explanation, but the present disclosure is not limited thereto.

As in Embodiment 1, as a plurality of SSB indexes are included in a PDCCH order, the PRACH may be repeatedly transmitted on a plurality of PRACH occasions related to the plurality of SSB indexes.

Additionally, considering/based on detection of a PDCCH order (i.e., a first PDCCH) by a terminal, a PRACH may be transmitted to a base station based on/using/through one or more QCL RSs among the plurality of QCL RSs (i.e., used/applied for PDCCH order transmission).

For example, when the first PDCCH is detected by a UE in all of the plurality of SS sets, the PRACH may be transmitted based on/using/via the plurality of QCL RSs.

Alternatively, when the first PDCCH is detected by a terminal in only one SS set among the plurality of SS sets, the PRACH may be transmitted based on/using/through only a QCL RS associated with the one SS set among the plurality of QCL RSs.

Alternatively, even if the first PDCCH is all detected in the plurality of SS sets by a terminal, if reception quality of the plurality of QCL RSs differs by more than a specific value, the PRACH may be transmitted based on/using/through only a QCL RS with high reception quality among the plurality of QCL RSs.

In response to a first message, a terminal receives a second message for a random access procedure from a base station (S1503).

Here, a second message for a random access procedure may correspond to MSG2 (i.e. PDCCH, PDSCH for random access response) and/or MSG4 (i.e. PDSCH for contention resolution) for the 4-step random access procedure (see FIG. 8), and may correspond to MSGB (i.e., PUSCH scheduled by the random access response UL grant and PDSCH for contention resolution) for the 2-step random access procedure (see FIG. 9).

For convenience of explanation, a PDCCH (hereinafter, a second PDCCH) for a random access response will be mainly described below, but the present disclosure is not limited thereto. Here, a second PDCCH refers to a PDCCH including a DCI (i.e. with CRC scrambled with RA-RNTI) that schedules a PDSCH carrying a random access response for the random access procedure in response to the PRACH.

As in Embodiment 2, the transmission operation of the second PDCCH may be determined depending on whether the PRACH is transmitted based on/using/through all of the plurality of QCL RSs or is transmitted based on/using/through only one of the plurality of QCL RSs.

For example, if the PRACH is transmitted based on/using/via all of the plurality of QCL RSs, the second PDCCH may be transmitted within a plurality of SS sets (here, the plurality of SS sets may be different from the plurality of SS sets through which the PDCCH order is transmitted) based on/using/through all of the plurality of QCL RSs (i.e., MTRP repetition).

Alternatively, if the PRACH is transmitted based on/using/via one QCL RS among the plurality of QCL RSs, the second PDCCH may be transmitted within a plurality of SS sets (here, the plurality of SS sets may be different from the plurality of SS sets through which the PDCCH order is transmitted) based on/using/through only the one QCL RS (i.e., STRP repetition). Here, regardless of whether a plurality of QCL RSs in a plurality of TCI states (i.e., TCI states configured in a plurality of CORESETs used for second PDCCH monitoring) related to the second PDCCH are configured, the second PDCCH may be transmitted based on/using/through only the one QCL RS.

Alternatively, if the PRACH is transmitted based on/using/via one QCL RS among the plurality of QCL RSs, the second PDCCH may be transmitted within a single SS set based on/using/through only the one QCL RS (i.e., STRP non-repetition).

Afterwards, in the case of a 4-step random access procedure, transmission and reception operations of MSG3 and MSG4 can be performed as illustrated in FIG. 8.

FIG. 16 is a diagram illustrating the operation of a base station for a method of performing a random access procedure according to an embodiment of the present disclosure.

In FIG. 16, an operation of a base station based on the above-proposed methods is illustrated. An example of FIG. 16 is for convenience of a description, and it does not limit a scope of the present disclosure. Some step(s) illustrated in FIG. 16 may be omitted according to a situation and/or a configuration. In addition, in FIG. 16, a base station is just one example, and may be implemented by a device illustrated in the following FIG. 17. For example, a processor 102/202 in FIG. 17 may be controlled to transmit and receive a channel/a signal/data/information, etc. by using a transceiver 106/206 and may be controlled to store a channel/a signal/data/information, etc. which will be transmitted or received in a memory 104/204.

Referring to FIG. 16, a base station transmits a PDCCH order for triggering a random access procedure to a terminal (S1601).

Here, a PDCCH order may be transmitted through a PDCCH (hereinafter, a first PDCCH). Additionally, as described above, a PDCCH including a PDCCH order may be transmitted in multiple SS sets. Here, a plurality of SS sets may each be associated with a plurality of CORESETs, and a TCI state may be configured for each CORESET. TCI state can configure a QCL RS and a QCL type as described above. That is, a plurality of different QCL RSs may be configured in a plurality of TCI states for the plurality of CORESETs. In other words, the PDCCH order may be repeatedly transmitted to a terminal on a plurality of SS sets based on a plurality of different QCL RSs.

Additionally, the PDCCH order may include a plurality of SSB indices.

A base station receives a first message for a random access procedure from a terminal in response to a PDCCH order (S1602).

Here, a first message for a random access procedure may correspond to MSG1 (i.e. PRACH or random access preamble transmitted on PRACH) and/or MSG3 (i.e. PDSCH scheduled by random access response UL grant) for the 4-step random access procedure (see FIG. 8), and may correspond to MSGA (i.e., PRACH and PUSCH carrying a random access preamble) (see FIG. 9) for the 2-step random access procedure.

Hereinafter, a PRACH will be mainly described for convenience of explanation, but the present disclosure is not limited thereto.

As in Embodiment 1, as a plurality of SSB indexes are included in a PDCCH order, the PRACH may be repeatedly transmitted on a plurality of PRACH occasions related to the plurality of SSB indexes.

Additionally, considering/based on detection of a PDCCH order (i.e., a first PDCCH) by a terminal, a PRACH may be transmitted to a base station based on/using/through one or more QCL RSs among the plurality of QCL RSs (i.e., used/applied for PDCCH order transmission).

For example, when the first PDCCH is detected by a UE in all of the plurality of SS sets, the PRACH may be transmitted based on/using/via the plurality of QCL RSs.

Alternatively, when the first PDCCH is detected by a terminal in only one SS set among the plurality of SS sets, the PRACH may be transmitted based on/using/through only a QCL RS associated with the one SS set among the plurality of QCL RSs.

Alternatively, even if the first PDCCH is all detected in the plurality of SS sets by a terminal, if reception quality of the plurality of QCL RSs differs by more than a specific value, the PRACH may be transmitted based on/using/through only a QCL RS with high reception quality among the plurality of QCL RSs.

In response to a first message, a base station transmits a second message for a random access procedure to a base station (S1603).

Here, a second message for a random access procedure may correspond to MSG2 (i.e. PDCCH, PDSCH for random access response) and/or MSG4 (i.e. PDSCH for contention resolution) for the 4-step random access procedure (see FIG. 8), and may correspond to MSGB (i.e., PUSCH scheduled by the random access response UL grant and PDSCH for contention resolution) for the 2-step random access procedure (see FIG. 9).

For convenience of explanation, a PDCCH (hereinafter, a second PDCCH) for a random access response will be mainly described below, but the present disclosure is not limited thereto. Here, a second PDCCH refers to a PDCCH including a DCI (i.e. with CRC scrambled with RA-RNTI) that schedules a PDSCH carrying a random access response for the random access procedure in response to the PRACH.

As in Embodiment 2, the transmission operation of the second PDCCH may be determined depending on whether the PRACH is transmitted based on/using/through all of the plurality of QCL RSs or is transmitted based on/using/through only one of the plurality of QCL RSs.

For example, if the PRACH is transmitted based on/using/via all of the plurality of QCL RSs, the second PDCCH may be transmitted within a plurality of SS sets (here, the plurality of SS sets may be different from the plurality of SS sets through which the PDCCH order is transmitted) based on/using/through all of the plurality of QCL RSs (i.e., MTRP repetition).

Alternatively, if the PRACH is transmitted based on/using/via one QCL RS among the plurality of QCL RSs, the second PDCCH may be transmitted within a plurality of SS sets (here, the plurality of SS sets may be different from the plurality of SS sets through which the PDCCH order is transmitted) based on/using/through only the one QCL RS (i.e., STRP repetition). Here, regardless of whether a plurality of QCL RSs in a plurality of TCI states (i.e., TCI states configured in a plurality of CORESETs used for second PDCCH monitoring) related to the second PDCCH are configured, the second PDCCH may be transmitted based on/using/through only the one QCL RS.

Alternatively, if the PRACH is transmitted based on/using/via one QCL RS among the plurality of QCL RSs, the second PDCCH may be transmitted within a single SS set based on/using/through only the one QCL RS (i.e., STRP non-repetition).

Afterwards, in the case of a 4-step random access procedure, transmission and reception operations of MSG3 and MSG4 can be performed as illustrated in FIG. 8.

General Device to which the Present Disclosure may be applied

FIG. 17 is a diagram which illustrates a block diagram of a wireless communication device according to an embodiment of the present disclosure.

In reference to FIG. 17, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/ signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing a random access procedure in a wireless communication system, the method performed by a terminal comprising:

receiving, from a base station, a first physical downlink control channel (PDCCH) including a PDCCH order for triggering a random access procedure, wherein the first PDCCH is transmitted in a plurality of search space (SS) sets, each of the plurality of SS sets are related to a plurality of control resource sets (CORESET), and a plurality of different quasi co-location (QCL) reference signals (RS) are configured in a plurality of transmission configuration indication (TCI) states for the plurality of CORESETs;

transmitting, to the base station, physical random access channel (PRACH) for the random access procedure in response to the PDCCH order; and

receiving, from the base station, a second PDCCH including downlink control information (DCI) for scheduling a physical downlink shared channel (PDSCH) carrying a random access response for the random access procedure, in response to the PRACH,

wherein, based on the PDCCH order including a plurality of synchronization signal block (SSB) indices, the PRACH is transmitted on a plurality of PRACH occasions related to the plurality of SSB indexes, and

wherein the PRACH is transmitted based on one or more QCL RSs among the plurality of QCL RSs in consideration of detection of the first PDCCH by the terminal.

2. The method of claim 1, wherein when the first PDCCH is detected by the terminal in only one SS set among the plurality of SS sets, the PRACH is transmitted based only on the QCL RS related to the one SS set among the plurality of QCL RSs.

3. The method of claim 1, wherein when the first PDCCH is detected by the terminal in all of the plurality of SS sets, the PRACH is transmitted based on the plurality of QCL RSs.

4. The method of claim 3, wherein even when the first PDCCH is detected by the terminal in all of the plurality of SS sets, if reception quality of the plurality of QCL RSs differs by more than a specific value, the PRACH is transmitted based only on a QCL RS with high reception quality among the plurality of QCL RSs.

5. The method of claim 1, wherein transmission operation of the second PDCCH is determined depending on whether the PRACH is transmitted based on all of the plurality of QCL RSs or based on only one of the plurality of QCL RSs.

6. The method of claim 5, wherein when the PRACH is transmitted based on all of the plurality of QCL RSs, the second PDCCH is transmitted within a plurality of SS sets based on all of the plurality of QCL RSs.

7. The method of claim 5, wherein when the PRACH is transmitted based on one QCL RS among the plurality of QCL RSs, the second PDCCH is transmitted within a plurality of SS sets based only on the one QCL RS.

8. The method of claim 7, wherein regardless of whether a plurality of QCL RSs in a plurality of TCI states related to the second PDCCH are configured, the second PDCCH is transmitted based only on the one QCL RS.

9. The method of claim 5, wherein when the PRACH is transmitted based on one QCL RS among the plurality of QCL RSs, the second PDCCH is transmitted within a single SS set based only on the one QCL RS.

10. A terminal of performing a random access procedure in a wireless communication system, the terminal comprising:

at least one transceiver for transmitting and receiving a wireless signal; and
at least one processor for controlling the at least one transceiver,
wherein the at least one processor configured to:

receive, from a base station, a first physical downlink control channel (PDCCH) including a PDCCH order for triggering a random access procedure, wherein the first PDCCH is transmitted in a plurality of search space (SS) sets, each of the plurality of SS sets are related to a plurality of control resource sets (CORESET), and a plurality of different quasi co-location (QCL) reference signals (RS) are configured in a plurality of transmission configuration indication (TCI) states for the plurality of CORESETs;

transmit, to the base station, a physical random access channel (PRACH) for the random access procedure in response to the PDCCH order; and

receive, from the base station, a second PDCCH including downlink control information (DCI) for scheduling a physical downlink shared channel (PDSCH) carrying a random access response for the random access procedure, in response to the PRACH,

wherein, based on the PDCCH order including a plurality of synchronization signal block (SSB) indices, the PRACH is transmitted on a plurality of PRACH occasions related to the plurality of SSB indexes, and

wherein the PRACH is transmitted based on one or more QCL RSs among the plurality of QCL RSs in consideration of detection of the first PDCCH by the terminal.

11. At least one non-transitory computer-readable medium storing at least one instruction, wherein the at least one instruction executable by at least one processor controls a device of performing a random access procedure to:

receive, from a base station, a first physical downlink control channel (PDCCH) including a PDCCH order for triggering a random access procedure, wherein the first PDCCH is transmitted in a plurality of search space (SS) sets, each of the plurality of SS sets are related to a plurality of control resource sets (CORESET), and a plurality of different quasi co-location (QCL) reference signals (RS) are configured in a plurality of transmission configuration indication (TCI) states for the plurality of CORESETs;

transmit, to the base station, a physical random access channel (PRACH) for the random access procedure in response to the PDCCH order; and

receive, from the base station, a second PDCCH including downlink control information (DCI) for scheduling a physical downlink shared channel (PDSCH) carrying a random access response for the random access procedure, in response to the PRACH,

wherein, based on the PDCCH order including a plurality of synchronization signal block (SSB) indices, the PRACH is transmitted on a plurality of PRACH occasions related to the plurality of SSB indexes, and

wherein the PRACH is transmitted based on one or more QCL RSs among the plurality of QCL RSs in consideration of detection of the first PDCCH by the terminal.

12. A processing apparatus configured to control a terminal of performing a random access procedure in a wireless communication system, the processing apparatus comprising:

at least one processor; and

at least one computer memory operably connected to the at least one processor and storing instructions that, based on being executed by the at least one processor, perform operations comprising:

receiving, from a base station, a first physical downlink control channel (PDCCH) including a PDCCH order for triggering a random access procedure, wherein the first PDCCH is transmitted in a plurality of search space (SS) sets, each of the plurality of SS sets are related to a plurality of control resource sets (CORESET), and a plurality of different quasi co-location (QCL) reference signals (RS) are configured in a plurality of transmission configuration indication (TCI) states for the plurality of CORESETs;

transmitting, to the base station, a physical random access channel (PRACH) for the random access procedure in response to the PDCCH order; and

receiving, from the base station, a second PDCCH including downlink control information (DCI) for scheduling a physical downlink shared channel (PDSCH) carrying a random access response for the random access procedure, in response to the PRACH,

wherein, based on the PDCCH order including a plurality of synchronization signal block (SSB) indices, the PRACH is transmitted on a plurality of PRACH occasions related to the plurality of SSB indexes, and

wherein the PRACH is transmitted based on one or more QCL RSs among the plurality of QCL RSs in consideration of detection of the first PDCCH by the terminal.

13. A method of performing a random access procedure in a wireless communication system, the method performed by a base station comprising:

transmitting, to a terminal, a first physical downlink control channel (PDCCH) including a PDCCH order for triggering a random access procedure, wherein the first PDCCH is transmitted in a plurality of search space (SS) sets, each of the plurality of SS sets are related to a plurality of control resource sets (CORESET), and a plurality of different quasi co-location (QCL) reference signals (RS) are configured in a plurality of transmission configuration indication (TCI) states for the plurality of CORESETs;

receiving, from the terminal, a physical random access channel (PRACH) for the random access procedure in response to the PDCCH order; and

transmitting, to the terminal, a second PDCCH including downlink control information (DCI) for scheduling a physical downlink shared channel (PDSCH) carrying a random access response for the random access procedure, in response to the PRACH,

wherein, based on the PDCCH order including a plurality of synchronization signal block (SSB) indices, the PRACH is transmitted on a plurality of PRACH occasions related to the plurality of SSB indexes, and

wherein the PRACH is transmitted based on one or more QCL RSs among the plurality of QCL RSs in consideration of detection of the first PDCCH by the terminal.

14. A base station of performing a random access procedure in a wireless communication system, the base station comprising:

at least one transceiver for transmitting and receiving a wireless signal; and

at least one processor for controlling the at least one transceiver,

wherein the at least one processor configured to:

transmit, to a terminal, a first physical downlink control channel (PDCCH) including a PDCCH order for triggering a random access procedure, wherein the first PDCCH is transmitted in a plurality of search space (SS) sets, each of the plurality of SS sets are related to a plurality of control resource sets (CORESET), and a plurality of different quasi co-location (QCL) reference signals (RS) are configured in a plurality of transmission configuration indication (TCI) states for the plurality of CORESETs;

receive, from the terminal, a physical random access channel (PRACH) for the random access procedure in response to the PDCCH order; and

transmit, to the terminal, a second PDCCH including downlink control information (DCI) for scheduling a physical downlink shared channel (PDSCH) carrying a random access response for the random access procedure, in response to the PRACH,

wherein, based on the PDCCH order including a plurality of synchronization signal block (SSB) indices, the PRACH is transmitted on a plurality of PRACH occasions related to the plurality of SSB indexes, and

wherein the PRACH is transmitted based on one or more QCL RSs among the plurality of QCL RSs in consideration of detection of the first PDCCH by the terminal.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

Freq.

1ms subframe:
14 symbols/slot

12 × 15 KHz

12 × 30 KHz

PRB

12 × 60 KHz

Time

# FIG.5

Resource grid

A carrier
(up to 3300 subcarriers,i,e.,275 RBs)

A BWP

1 RB=12 subcarrier

1 RE

1 subcarrier

1 Symbol

l=0 ·····

k=0

# FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601

S602

S603

S604

S605

S606

S607

S608

· DL/UL ACK/NACK
· UE CQI/PMI RI REPORT
  USING PUSCH AND PUCCH

EP 4 418 784 A1

# FIG.7

# FIG.8

(a)

(b)

# FIG.9

(a)

(b)

# FIG.10

TRP 1

TRP 2

Layer group #1
for CW #1

Layer group #2
for CW #1

UE1

(a)

TRP 1

TRP 2

Layer group #1
for CW #1

Layer group #2
for CW #2

UE1

(b)

# FIG.11

PDCCH order: DCI
format 1_0 with C-RNTI

PRACH

DCI format 1_0
with RA-RNTI

PDSCH carrying RAR

QCL relation: The same beam/QCL assumption

Time

EP 4 418 784 A1

# FIG.12

PDCCH order

RACH preamble

C-RNTI

Blockage

| QCL RS 1 | QCL RS 2 |

Time

EP 4 418 784 A1

# FIG.13

PDCCH order: DCI
format 1_0 with C-RNTI

RACH preamble

PDSCH carrying RAR:
DCI format 1_0 with RA-RNTI

QCL assumption:
STRP repetition or
STRP non-repetition or
MTRP repetition

| QCL RS 1 | QCL RS 2 |
|----------|----------|

Time

EP 4 418 784 A1

## FIG.14

UE              Base station

PDCCH order triggering random access procedure    S1410

First message for random access procedure    S1420

Second message for random access procedure    S1430

## FIG.15

| Receive PDCCH order triggering a random access procedure | S1501 |

| Transmit a first message for a random access procedure | S1502 |

| Receive a second message for a random access procedure | S1503 |

## FIG.16

| Transmit PDCCH order triggering a random access procedure | S1601 |

| Receive a first message for a random access procedure | S1602 |

| Transmit a second message for a random access procedure | S1603 |

FIG.17

<table>
<tr><td colspan="2" align="center">**INTERNATIONAL SEARCH REPORT**</td><td colspan="2">International application No.<br><br>**PCT/KR2022/015365**</td></tr>
<tr><td colspan="4">**A.  CLASSIFICATION OF SUBJECT MATTER**<br><br>    **H04W 72/04**(2009.01)i; **H04L 1/08**(2006.01)i; **H04W 74/08**(2009.01)i; **H04W 74/00**(2009.01)i; **H04B 7/022**(2017.01)i<br><br>According to International Patent Classification (IPC) or to both national classification and IPC</td></tr>
<tr><td colspan="4">**B.   FIELDS SEARCHED**</td></tr>
<tr><td colspan="4">Minimum documentation searched (classification system followed by classification symbols)<br>    H04W 72/04(2009.01); H04W 74/00(2009.01); H04W 74/08(2009.01)</td></tr>
<tr><td colspan="4">Documentation searched other than minimum documentation to the extent that such documents are included in the fields searched<br>    Korean utility models and applications for utility models: IPC as above<br>    Japanese utility models and applications for utility models: IPC as above</td></tr>
<tr><td colspan="4">Electronic data base consulted during the international search (name of data base and, where practicable, search terms used)<br><br>    eKOMPASS (KIPO internal) & keywords: PDCCH(physical downlink control channel), 명령(order), 서치 스페이스(search space), 제어 자원 세트(CORESET: control resource set), 전송 설정 지시(TCI: transmission configuration indication), QCL(quasi co-location), 참조 신호(RS: reference signal), PRACH(physical random access channel), 동기 신호 블록(SSB: synchronization signal block)</td></tr>
<tr><td colspan="4">**C.   DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">ERICSSON. Remaining issues on PDCCH, PUSCH and PUCCH enhancements for multi-TRP. R1-2110289, 3GPP TSG-RAN WG1 Meeting #106bis-e. 02 October 2021.<br>    See sections 2.1.5-2.1.6.</td><td>1-14</td></tr>
<tr><td>A</td><td colspan="2">NOKIA et al. Enhancements for Multi-TRP URLLC schemes. R1-2109871, 3GPP TSG-RAN WG1 Meeting #106bis-e. 01 October 2021.<br>    See sections 1-2.3.3.</td><td>1-14</td></tr>
<tr><td>A</td><td colspan="2">WO 2021-034084 A1 (SAMSUNG ELECTRONICS CO., LTD.) 25 February 2021 (2021-02-25)<br>    See paragraphs [0038]-[0298]; and figures 1-22.</td><td>1-14</td></tr>
<tr><td>A</td><td colspan="2">LENOVO et al. Discussion on NTN timing relationship. R1-2109323, 3GPP TSG-RAN WG1 Meeting #106bis-e. 01 October 2021.<br>    See sections 1-2.3.</td><td>1-14</td></tr>
<tr><td colspan="2">☑ Further documents are listed in the continuation of Box C.</td><td colspan="2">☑ See patent family annex.</td></tr>
<tr><td colspan="2">\*    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed</td><td colspan="2">"T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family</td></tr>
<tr><td colspan="2">Date of the actual completion of the international search<br><br>        **25 January 2023**</td><td colspan="2">Date of mailing of the international search report<br><br>        **25 January 2023**</td></tr>
<tr><td colspan="2">Name and mailing address of the ISA/KR<br><br>**Korean Intellectual Property Office**<br>**Government Complex-Daejeon Building 4, 189 Cheongsa-ro, Seo-gu, Daejeon 35208**<br>Facsimile No. **+82-42-481-8578**</td><td colspan="2">Authorized officer<br><br><br><br><br>Telephone No.</td></tr>
</table>

Form PCT/ISA/210 (second sheet) (July 2022)

**INTERNATIONAL SEARCH REPORT**

International application No.

**PCT/KR2022/015365**

**C.    DOCUMENTS CONSIDERED TO BE RELEVANT**

| Category* | Citation of document, with indication, where appropriate, of the relevant passages | Relevant to claim No. |
|---|---|---|
| A | QUALCOMM INCORPORATED. Enhancements on HST-SFN deployment. R1-2107327, 3GPP TSG RAN WG1 Meeting #106-e. 07 August 2021.<br>        See sections 1-6. | 1-14 |

Form PCT/ISA/210 (second sheet) (July 2022)

INTERNATIONAL SEARCH REPORT

**Information on patent family members**

International application No.

**PCT/KR2022/015365**

| Patent document cited in search report | Publication date (day/month/year) | Patent family member(s) | | Publication date (day/month/year) |
|---|---|---|---|---|
| WO 2021-034084 A1 | 25 February 2021 | EP 3997949 | A1 | 18 May 2022 |
| | | US 11310836 | B2 | 19 April 2022 |
| | | US 2021-0058971 | A1 | 25 February 2021 |
| | | US 2022-0256612 | A1 | 11 August 2022 |

Form PCT/ISA/210 (patent family annex) (July 2022)